# EUROPÄISCHE PATENTSCHRIFT

(11) **EP 4 134 405 B1**
(45) Veröffentlichungstag und Bekanntmachung des Hinweises auf die Patenterteilung: **09.04.2025**
(21) Anmeldenummer: 22020373.1
(22) Anmeldetag: 19.12.2012
(51) Int. Cl.: C09D 5/22, D21H 21/48, B41M 3/14, B42D 15/00, B42D 25/29

(54) **SICHERHEITSMERKMAL MIT MEHREREN KOMPONENTEN**
SECURITY FEATURE WITH MULTIPLE COMPONENTS
CARACTÉRISTIQUE DE SÉCURITÉ POURVUE DE PLUSIEURS COMPOSANTS

(30) Priorität: 23.12.2011 DE 102011122246
(43) Veröffentlichungstag der Anmeldung: 15.02.2023
(62) Teilanmeldung aus: 12813278.4
(73) Patentinhaber: Giesecke+Devrient Currency Technology GmbH, 81677 München (DE)
(72) Erfinder: Giering, Thomas, 85614 Kirchseeon (DE); Kecht, Johann, 81677 München (DE); Steinlein, Stephan, 80538 München (DE)
(74) Vertreter: Giesecke+Devrient IP

(56) Entgegenhaltungen:
- DE-A1- 3 048 734

## Beschreibung

Die Erfindung betrifft ein Sicherheitsmerkmal mit einer lumineszierenden Komponente und einer die lumineszierende Komponente tarnenden Komponente.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente zur Produktsicherung zu verstehen.

Die Absicherung von Wertdokumenten gegen Fälschung mittels Sicherheitsmerkmalen mit einer lumineszierenden Komponente ist bereits seit langem bekannt. Die lumineszierende Komponente wird dabei von Substanzen gebildet, die nachfolgend auch als Luminophore bezeichnet werden, und von mit Übergangsmetallen oder Seltenerdmetallen als lumineszierende Ionen dotierten Wirtsgittern (nachfolgend wird für Wirtsgitter auch der Begriff Matrix verwendet) gebildet werden. Solche Ionen haben den Vorteil, dass sie, nach entsprechender Anregung, eine oder mehrere charakteristische schmalbandige Lumineszenzen zeigen, die einen sicheren Nachweis und die Abgrenzung gegenüber anderen Spektren erleichtern. Für die Dotierung wurden auch schon Kombinationen von Übergangsmetallen und/oder Seltenerdmetallen diskutiert. Solche Substanzen haben den Vorteil, dass, zusätzlich zu den obengenannten Lumineszenzen, sogenannte Energietransferprozesse beobachtet werden, die zu komplizierteren Emissionsspektren führen können. Bei diesen Energietransferprozessen kann ein Ion seine Energie auf ein anderes Ion übertragen und die Spektren können dann aus mehreren schmalbandigen Linien bestehen, die charakteristisch für die beiden Ionen sind.

Die genannten Sicherheitsmerkmale zum Absichern von Wertdokumenten weisen als lumineszierende Komponente einzelne Luminophore auf, deren Emissionen sich hinsichtlich ihrer spektralen und/oder zeitlichen Eigenschaften unterscheiden. Die Sicherheitsmerkmale werden in verschiedenen Anwendungsformen in und/ oder auf Wertdokumente ein- und/ oder aufgebracht. Dabei kann für die lumineszierende Komponente auch eine Kombination von Luminophoren verwendet werden. Die Emissionsbanden der verwendeten Luminophore stellen eine Spektralkodierung dar. Mehrere verschiedene Luminophore können zu Systemen kombiniert werden, wobei die einzelnen Systeme unabhängig voneinander sind. Die Emission der verwendeten Luminophore wird auch als Lumineszenz bezeichnet, dies kann Fluoreszenz und/oder Phosphoreszenz beinhalten.

Es ist auch bekannt, dass die beschriebenen Sicherheitsmerkmale nicht alleine von der lumineszierenden Komponente gebildet werden. Als weitere Komponente weisen manche Sicherheitselemente eine Komponente auf, die zur Tarnung der lumineszierenden Komponente eingesetzt wird. In der DE 30 48 734 A1 wird beispielsweise ein Sicherheitspapier mit die Echtheitsmerkmale schützenden Tarnstoffen beschrieben. Die Tarnstoffe der tarnenden Komponenten entsprechen dabei im Wesentlichen den lumineszierenden Komponenten, d. h. sowohl für die lumineszierende Komponente als auch für die tarnende Komponente werden sehr ähnliche oder gleichartige Wirtsgitter und Dotierstoffe verwendet. Jedoch wird bei der Herstellung der Tarnstoffe für die tarnende Komponente darauf geachtet, dass die Tarnstoffe keine lumineszierenden Eigenschaften aufweisen. Dazu werden beispielsweise Parameter beim Glüh- oder Mahlprozess der tarnenden Komponente im Gegensatz zur Herstellung der lumineszierenden Komponente verändert. Alternativ werden sogenannte Lumineszenzkiller verwendet. Dadurch kann die lumineszierende Komponente mit üblichen analysetechnischen Methoden nicht von der tarnenden Komponente unterschieden werden. Hierdurch wird vor allem die Position der lumineszierenden Komponente verschleiert, da sie mit den üblichen Methoden nicht von der tarnenden Komponente unterschieden werden kann.

Da es sich bei lumineszierender und tarnender Komponente um sehr ähnliche oder sogar gleiche Substanzen handelt, wird keine Tarnung der stofflichen Identität der lumineszierenden Komponente erreicht, da durch die Verwendung der tarnenden Komponente die untersuchbare Materialmenge des Sicherheitsmerkmals im zu sichernden Wertdokument insgesamt erhöht wird, weshalb die Analysierbarkeit des Sicherheitsmerkmals bzw. der lumineszierenden Komponente eher erleichtert als erschwert wird.

Ausgehend von diesem Stand der Technik liegt der Erfindung die Aufgabe zugrunde, ein Sicherheitsmerkmal mit einer lumineszierenden Komponente und einer die lumineszierende Komponente tarnenden Komponente anzugeben, wobei die Analyse von Art und Dotierung eines für die lumineszierende Komponente verwendeten Wirtsgitters verhindert oder zumindest wesentlich erschwert werden soll. Dabei soll vor allem eine Tarnung der lumineszierenden Komponente gegenüber einer Elementaranalyse erreicht werden. Die Identifizierung der lumineszierenden Komponente soll auch für den Fall erschwert werden, dass das Sicherheitsmerkmal in reiner Form vor Einbringung in Wertdokumente oder durch Veraschung von echten Wertdokumenten vorliegt, und dann mittels Elementaranalysemethoden wie XRF (Röntgenfluoreszenzanalyse) oder ICP-AES (optische Emissionsspektrometrie mit induktiv gekoppeltem Plasma) untersucht werden kann.

Die Lösung dieser Aufgabe ergibt sich aus den unabhängigen Ansprüchen. Weiterbildungen sind Gegenstand der Unteransprüche.

Die Erfindung geht von einem Sicherheitsmerkmal mit einer lumineszierenden Komponente mit mindestens einem Luminophor, bestehend aus mindestens einem dotierten Wirtsgitter, und einer die lumineszierende Komponente tarnenden Komponente aus, wobei die tarnende Komponente chemische Elemente aufweist, die ähnliche strukturchemische Eigenschaften wie die chemischen Elemente der lumineszierenden Komponente aufweisen, wobei die chemischen Elemente der tarnenden Komponente und die chemischen Elemente der lumineszierenden Komponente von unterschiedlichen chemischen Elementen gebildet werden.

Die Erfindung weist den Vorteil auf, dass durch die Verwendung einer tarnenden Komponente mit chemischen Elementen, die ähnlichen strukturchemischen Eigenschaften aufweisen, aber im Vergleich zu den chemischen Elementen der lumineszierenden Komponente unterschiedlich sind, eine besonders gute Tarnung der lumineszierenden Komponente erreicht werden kann, weil durch die zusätzlich für die Tarnung verwendeten chemischen Elemente der Analyseaufwand stark erhöht wird. Neben der Erhöhung des Aufwands für die Analyse kann die lumineszierende Komponente zudem nie mit vollständiger Sicherheit angegeben werden, da durch die ähnlichen strukturchemischen Eigenschaften der chemischen Elemente eine Vielzahl von Substanzen in Frage kommt.

Weitere Vorteile der vorliegenden Erfindung ergeben sich aus den abhängigen Ansprüchen sowie der nachfolgenden Beschreibung von Ausführungsformen.

Sicherheitsmerkmale für Wertdokumente mit einer lumineszierenden Komponente auf Basis von NIR-Luminophoren mit spezifischen Eigenschaften in ihrer Emission und Anregung sind bekannt, z. B. aus WO 81/03507 A1, EP 0 966 504 B1, W O2011/084663 A2, DE 198 04 021 A1, DE 101 11 116 A1. Solche Sicherheitsmerkmale werden im Normalfall entweder direkt in Form eines Pulvers bei Herstellung des Substrats, z. B. der Papiermasse, des Wertdokuments zugesetzt, oder das Pulver wird einer Druckfarbe zugefügt, welche dann nachträglich auf das Substrat aufgetragen wird.

Das vorliegende Sicherheitsmerkmal für Wertdokumente, z. B. Banknoten, besteht aus einem Gemisch mit mehreren Komponenten, durch welche die elementare Zusammensetzung einer lumineszierenden Komponente bei Elementaranalyse der Banknote bzw. von Banknotenasche oder des Gemischs selbst getarnt wird. Hierzu wird eine tarnende Komponente verwendet, welche das Verhältnis von Matrixbestandteilen der lumineszierenden Komponente verändern kann und zusätzliche chemische Elemente einführt, so dass nicht ohne weiteres ersichtlich ist, aus welchen Elementkombinationen die Matrix bzw. das Wirtsgitter der lumineszierenden Komponente aufgebaut ist. Die tarnende Komponente wird dabei derart gewählt, dass eine Nachbildung des Sicherheitsmerkmals, d. h. insbesondere ihrer lumineszierenden Komponente, anhand detektierter Elementbestandteile unmöglich bzw. signifikant erschwert ist.

Dem Sicherheitsmerkmal können zusätzliche Komponenten mit unterschiedlichen Funktionalitäten beigemischt sein, um vorteilhafte Eigenschaften bzw. eine erhöhte Sicherheit gegen Nachahmung des Sicherheitsmerkmals zu erreichen. Die zusätzlichen Komponenten können eine Produktionskomponente oder eine Kodierungskomponente sein, deren genauere Funktion noch erläutert werden wird. Es ist möglich, dass auch die zusätzlichen Komponenten eine Wirkung entsprechend der Wirkung der tarnenden Komponente aufweisen, um den Aufbau der lumineszierenden Komponente weiter abzusichern.

Es handelt sich dabei um einen im nichtsichtbaren Spektralbereich emittierenden Luminophor, bestehend aus einer dotierten kristallinen Matrix (Wirtsgitter). Vorzugsweise besitzen die Stoffe hohe Quantenausbeuten bzw. Signalintensitäten und geeignete Abklingzeiten um selbst bei kleinen Einsatzmengen und hohen Bewegungsgeschwindigkeiten der Banknote in Banknotenbearbeitungsmaschinen (bis zu 40 oder mehr Banknoten pro Sekunde) eine fehlerfreie Überprüfbarkeit zu gewährleisten. Die lumineszierende Komponente macht üblicherweise 20% bis 80% des das Sicherheitsmerkmal bildenden Gemischs aus, bevorzugt 25% bis 60%, besonders bevorzugt 30% bis 50% (alle Angaben jeweils Gewichtsprozent).

Sowohl Art der Matrix als auch der enthaltenen Dotierstoffe haben großen Einfluss auf die als Echtheitskriterium zu überprüfenden spektralen Eigenschaften. Es können zum erhöhten Schutz auch Mischungen aus mehreren unterschiedlichen Luminophoren in gleichen oder unterschiedlichen Matrizen eingesetzt werden. Zur Nachstellung der lumineszierenden Komponente muss daher u. a. die Zusammensetzung und Dotierung der Matrix bekannt sein, um den Luminophor nachzubilden zu können. Insofern ist es essentiell eine Analyse der Stöchiometrie über Elementaranalyse des Merkmals zu erschweren. Besonders soll erschwert werden, dass anhand ganzer Banknoten bzw. Banknotenschnipsel etc., oder durch Veraschung von Banknotenmaterial erhaltene Banknotenasche, durch Elementaranalysemethoden wie XRF oder ICP-AES analysiert wird um Rückschlüsse auf die Merkmalszusammensetzung zu ziehen.

Um eine Tarnung der die lumineszierende Komponente bildenden chemischen Elemente des Wirtsgitters bzw. der Matrix des Luminophors zu erreichen, müssen durch die tarnende Komponente möglichst plausible Alternativen für die jeweils einzelnen Matrixbestandteile des Luminophors zum Sicherheitsmerkmal hinzugefügt werden, damit nach einer Analyse des Sicherheitsmerkmals nicht sicher erkannt werden kann, welche chemischen Elemente letztendlich am Aufbau der Matrix des Luminophors beteiligt sind.

Typischerweise besteht ein Luminophor der lumineszierenden Komponente aus komplexen kristallinen Mischoxiden oder Mischoxisulfiden mit einer oder mehreren Dotierungen, z. B. aus Seltenerden oder Übergangsmetallen.

Eine beispielhafte Vorgehensweise zur Tarnung von am Aufbau der Matrix eines Luminophors des Sicherheitsmerkmals beteiligter chemischer Elemente soll nachfolgend verdeutlicht werden.

Aus der DE 198 04 021 A1 sind verschieden Luminophore bekannt, welche die lumineszierende Komponente eines Sicherheitsmerkmals bilden können. Die beispielhaft genannte Substanz Y_{2,91}Pr_{0,09}Cr₂Al₃O₁₂ kann als lumineszierende Komponente eines maschinenlesbares Sicherheitsmerkmal eingesetzt werden. Wird beispielsweise die Asche eines dieses Sicherheitsmerkmal enthaltenden Wertdokuments einer Elementaranalyse unterzogen, würden größere Mengen Yttrium, Chrom und Aluminium sowie kleinere Mengen Praseodym als untypische Aschebestandteile detektiert werden können. Dies legt die Natur des Luminophors nahe (Yttrium-Chrom-Aluminium-Oxid, dotiert mit Praseodym), und erleichtert so die Nachbildung des Sicherheitsmerkmals.

Zur effektiven Tarnung der lumineszierenden Komponente des Sicherheitsmerkmals müssen daher chemische Elemente die tarnende Komponente bilden, die derart auf die chemischen Elementen der lumineszierenden Komponente abgestimmt sind, dass durch die Kombination der im Sicherheitsmerkmal enthaltenen chemischen Elemente nicht mehr offensichtlich ist, welche der chemischen Elemente die lumineszierende Komponente bilden. "Abgestimmte" chemische Elemente haben dabei ein ähnliches strukturchemisches Verhalten, z. B. in Bezug auf Ionenradius, Ladungszahl, präferierte Koordinationszahlen oder die Tendenz zu ionischen/kovalenten Bindungen, durch welche sich bestimmte chemische Elemente in Strukturen ähnlich einbauen und miteinander vertauscht werden können bzw. isostrukturelle Verbindungen oder homologe Mischreihen bilden.

Beispielsweise bilden Yttrium, Gadolinium, Lanthan und Luthetium meistens isostrukturelle Verbindungen und werden als nicht lumineszierende Seltenerdelemente oft als Matrixbestandteile in seltenerdbasierten Luminophoren verwendet. Es ist daher bei gleichzeitigem Vorhandensein z. B. von Yttrium und Gadolinium selbst bei gewisser Strukturkenntnis, z. B. dass es sich beim Merkmal um einen Luminophor auf Granatbasis handelt, nicht klar, ob nur Yttrium, nur Gadolinium, oder beide zusammen Bestandteil der Granatmatrix sind. Im Zweifelsfall müssen daher von allen drei Kombinationen Konzentrationsreihen und andere Variationen synthetisiert werden, um die genaue Identität des Merkmals zu bestimmen.

Ebenso kann aufgrund der chemischen Eigenschaften Chrom oft durch Eisen ersetzt werden, wohingegen Aluminium oft durch Gallium ersetzt werden kann.

Zur Tarnung des Dotierstoffs, in diesem Fall Praseodym, sollten weitere typischerweise als Lumineszenzzentrum oder Sensitizer fungierende Seltenerden zugegeben werden, beispielsweise Terbium und Neodym. Selbst wenn aufgrund anderer Analyseformen, z. B. Spektralanalyse, bestimmte Details der lumineszierenden Komponente wie das primäre Lumineszenzzentrum (Dotierstoff) bereits erkannt wurden, bleiben sekundäre Aspekte wie Vorhandensein und Art von Sensitizern und Kodotierungen, welche oft u. a. benutzt werden um Lebenszeiten und Anregungsbanden des Luminophors zu modifizieren, somit ungewiss.

Durch Angebot von entsprechenden Alternativen für die restlichen Elemente der Matrix des Luminophors der lumineszierenden Komponente wächst der Analyseaufwand durch die zusätzlich möglichen Kombinationen exponentiell an, so dass eine Identifizierung des Sicherheitsmerkmals durch Synthesereihen unmöglich bzw. mit enormen Aufwand verbunden ist.

Für die oben beispielhaft genannte Substanz Y_{2,91}Pr_{0,09}Cr₂Al₃O₁₂ als lumineszierende Komponente eines Sicherheitsmerkmals ist eine mögliche tarnende Komponente durch die nachfolgend angegebenen Substanzen gegeben (Angaben jeweils Gewichtsprozent).
34% GdGaO₃
34% FeAl₂O₄
1% Tb₂O₃
1% Nd₂O₃

Somit ist die die lumineszierende Komponente bildende Substanz Y_{2,91}Pr_{0,09}Cr₂Al₃O₁₂ mit einem Anteil von 30% im Sicherheitsmerkmal enthalten.

Zur Enttarnung der lumineszierenden Komponente müsste in diesem Beispiel für die Matrixbestandteile aus den Elementen Y, Gd, Ga, Al, Fe und Cr zuerst die richtige Kombination ausgewählt werden. Sodann wäre diese jeweils mit verschiedenen Kombinationen der möglichen Dotierstoffe Pr, Nd und Tb zu testen. Dies stellt zusammen mit den unbekannten restlichen Syntheseparametern (z. B. richtige Temperatur, Rohstoffe, Verarbeitung usw.) eine nahezu unüberwindbare Hürde für eine erfolgreiche Nachbildung des Sicherheitsmerkmals bzw. dessen lumineszierender Komponente dar. Als zusätzlicher Vorteil im Sinne der beabsichtigten Tarnung wird durch Verwenden von FeAl₂O₄ auch die Menge an Aluminium im Gemisch erhöht. Hierdurch wird das detektierte Cr:Al-Verhältnis, welches in der lumineszierenden Komponente bei 2:3 liegt, stark abgeändert. Dies erzeugt eine zusätzliche Hürde für eine erfolgreiche Nachahmung des Sicherheitsmerkmals. Selbst wenn korrekterweise davon ausgegangen wird, dass es sich bei der lumineszierenden Komponente um ein Chrom-Aluminium-Mischoxid handelt, so würde man die korrekte Zusammensetzung durch diese Änderung in einem anderen Stöchiometriebereich mit weniger Chrom und mehr Aluminium vermuten, bzw. der korrekte Bereich wäre nicht mehr über das durch Elementaranalyse detektierte Chrom-Aluminium -Verhältnis abschätzbar.

Die zu tarnende lumineszierende Komponente bzw. der Luminophor kann auch ein sogenannter nichtstöchiometrischer Kristall sein. Nichtstöchiometrische Kristalle sind Feststoffe mit einer mikroskopisch geordneten Struktur, d. h. die Atome der Struktur sind in einer regelmäßigen Weise angeordnet. Bestimmte dieser Kristallstrukturen sind gegenüber einem Ersetzen eines Atomtyps durch einen anderen tolerant, d. h. ihre mikroskopische Ordnung ändert sich dadurch nicht, falls bestimmte allgemeine Regeln wie Atomgrößen und Ladungsneutralität respektiert werden. Beispiele für solche nichtstöchiometrischen Kristalle sind Spinelle, Granate, Perowskite, Lanthanidoxysulfide, Zirkone usw. Werden bestimmte Gitterplätze eines nichtstöchiometrischen Kristalls von mehreren Elementen (Atomen) in einem bestimmten Verhältnis besetzt, wobei diese die spektralen Eigenschaften des Luminophors beeinflussen, ist es sinnvoll das Elementverhältnis des Gemischs des Sicherheitsmerkmals durch Zugabe bereits enthaltener Elemente zu verfälschen. Im Beispielfall beeinflusst das Cr-Al-Verhältnis der Verbindung u. a. die spektralen Eigenschaften des Luminophors. Durch die Zugabe von zusätzlichem Aluminium bleibt dieses relative Verhältnis somit selbst dann unbekannt, wenn herausgefunden wurde, dass zur Nachbildung des Sicherheitsmerkmals gleichzeitig Chrom und Aluminium notwendig sind. Die Tarnung mindestens eines elementaren Verhältnisses der Merkmalskomponente ist daher eine bevorzugte Ausprägung der Erfindung.

Eine genaue Elementaranalyse des Sicherheitsmerkmals ist aufgrund der geringen Einsatzmengen in Wertdokumenten, z. B. Banknoten, bzw. dem geringen Anteil des Sicherheitsmerkmals in Banknotenasche im Normalfall nicht möglich, bzw. hängt von der Genauigkeit der jeweiligen Messmethode (z. B. einfaches XRF mit einem Handgerät oder professionelle Spurenanalyse an einem Synchrotron) und den zu detektierenden chemischen Elementen ab. Daher ist es zur effektiven Tarnung zwar bevorzugt, aber nicht notwendig, die jeweils im Hinblick auf den Luminophor stöchiometrisch korrekten Mengen der chemischen Elemente der tarnenden Komponente hinzuzufügen. Die chemischen Elemente der tarnenden Komponenten sollen jedoch mindestens zu 30%, bevorzugt mindestens zu 50%, besonders bevorzugt mindestens zu 80% der molaren Menge des jeweils zu tarnenden Elementes des Luminophors vorhanden sein. Dadurch wird sichergestellt, dass die zusätzlich detektierbaren Elemente der tarnenden Komponente auch als mögliche Matrixbestandteile wahrgenommen werden.

Auch für die Tarnung von nur in geringen Mengen im Luminophor der lumineszierenden Komponente enthaltenen Dotierstoffen, wie Lumineszenzzentren oder Sensitizern, sollen die chemischen Elemente der tarnenden Komponente mit mindestens 30% der molaren Menge des zu verbergenden Dotierstoffs im Gesamtgemisch des Sicherheitsmerkmals vorhanden sein. Im Fall der Dotierstoffe ist jedoch die Höhe des Anteils nicht kritisch, da bei einer Elementaranalyse, solange die Anteile hoch genug sind, um detektiert werden können, relativ beliebige Dotiermengen als plausible Möglichkeit für die Lumineszenzzentren, Kodotierungen oder Sensitizer erscheinen.

Es werden bevorzugt unterschiedliche Substanzen E1, E2, E3, ... für die tarnende Komponente so gewählt, dass sie die für die Tarnung erforderlichen chemischen Elemente in einer ausreichenden Menge beinhalten, um den Anteil einer einzelnen Substanz der tarnenden Komponente im Gesamtgemisch des Sicherheitsmerkmals im Bereich 5 bis 60%, bevorzugt 10 bis 40% zu ermöglichen (Angaben jeweils Gewichtsprozent). Diese bevorzugten Werte gelten jeweils für Substanzen der tarnenden Komponente für die Tarnung der chemischen Elemente der Matrix der lumineszierenden Komponente des Sicherheitsmerkmals. Zur Tarnung der in der Matrix verwendeten aktiven Dotierstoffe werden bevorzugt unterschiedliche Substanzen D1, D2, ... gewählt, die jeweils bevorzugt in einer Menge von 0,5 bis 4%, besonders bevorzugt von 1 bis 2% des Gesamtgemischs des Sicherheitsmerkmals vorliegen.

Ein Sicherheitsmerkmal sollte mindestens 2, bevorzugt mindestens 3, besonders bevorzugt mindestens 4 zusätzliche chemische Elemente in der tarnenden Komponente für die chemischen Elemente der Matrix der lumineszierenden Komponente enthalten. Ein chemisches Element eines Dotierstoffs sollte mit mindestens 1, bevorzugt mindestens 2 zusätzlichen chemischen Elementen getarnt werden. Bevorzugt wird zusätzlich das Verhältnis von zwei in der Matrix der lumineszierenden Komponente enthaltenen chemischen Elementen durch Zugabe eines bereits in der Matrix vorhanden chemischen Elementes verändert.

Dies geschieht bevorzugt durch Auswahl von mindestens 1, bevorzugt mindestens 2, besonders bevorzugt mindestens 3 Substanzen E1, E2, E3, ... welche die zur Tarnung der chemischen Elemente der Matrix benötigten chemischen Elemente enthalten. Zusätzlich durch mindestens 1, bevorzugt mindestens 2 Substanzen D1, D2, ... zur Tarnung der in der Matrix verwendeten aktiven Dotierstoffe. Bevorzugt enthält eine der Substanzen zur Tarnung der Elemente der Matrix E1, E2, E3, ... zusätzlich ein Element der Matrix um das Elementverhältnis der Matrix zu verbergen. Stattdessen kann auch eine andere Substanz zugegeben werden, die ein entsprechendes Element der Matrix enthält, aber formal keine der Substanzen E1, E2, E3, ... ist, da die andere Substanz keine weiteren Elemente der Matrix enthält.

Um eine Auswahl von geeigneten chemischen Elementen zu den jeweils zu tarnenden Elementen der Matrix zu ermöglichen, werden geeignete Elemente nachfolgend jeweils in Gruppen geordnet. Dabei kann ein Element einer Gruppe jeweils durch ein anderes Element der Gruppe verborgen werden. Weiterhin werden Untergruppen von Elementen angegeben, welche sich besonders gut zur gegenseitigen Tarnung eignen.

Beispielsweise existieren große Parallelen in der jeweiligen Strukturchemie der Seltenen Erden, wodurch sie auch über chemische Methoden nicht ohne weiteres voneinander trennbar sind. Sie lassen sich daher in Matrizen fast immer isostrukturell gegeneinander austauschen. Somit bilden {Y, La, Ce, Pr, Nd, Pm, Sm, Eu, Gd, Tb, Er, Tm, Yb, Lu}
eine Gruppe an alternativen Elementen.

Bevorzugt werden jedoch die Untergruppen
{Y, La, Ce, Gd, Lu} und
{Ce, Pr, Nd, Sm, Eu, Tb, Er, Tm, Yb}
für eine gegenseitige Tarnung verwendet, weil jeweils typische Luminophor-Matrixelemente in der ersten Untergruppe {Y, La, Ce, Gd, Lu} und typische Lumineszenzzentren oder Sensitizer in der zweiten Untergruppe
{Ce, Pr, Nd, Sm, Eu, Tb, Er, Tm, Yb} zusammengruppiert sind. Dadurch wird die Wirkung einer gegenseitigen Tarnung von in den Untergruppen enthaltenen chemischen Elementen noch verbessert, da zudem ihre jeweiligen bevorzugten Einsatzgebiete übereinstimmen. Cer spielt dabei eine Sonderrolle, da es je nach Anwendung sowohl als Matrixelement als auch Lumineszenzzentrum oder Sensitizer benutzt werden kann und daher in beiden Gruppen vorhanden ist. Promethium spielt eine Sonderrolle, da es aufgrund seiner Radioaktivität nicht als bevorzugter Luminophor-Matrixbestandteil oder als Lumineszenzzentrum oder Sensitizer eingesetzt wird, weshalb es in keine der Untergruppen aufgenommen wurde.

Die Gruppierung richtet sich dabei nach ähnlichen strukturchemischen Eigenschaften in kristallinen anorganischen Matrizen. Beispielsweise enthält die erste Reihe des Periodensystems die Elemente H, Li, Na, K, Rb, Cs, Fr. Wasserstoff besitzt jedoch vollkommen andere Eigenschaften im Vergleich zu den restlichen Elementen und kann daher nicht plausibel zu deren Vertarnung eingesetzt werden. Hingegen ist bekannt, dass Thallium in der dritten Hauptgruppe in Form von Tl(I) sich oft in Kristallen analog zu Alkalimetallen einbauen lässt und sich dort analog verhält. Somit bilden {Li, Na, K, Rb, Cs, Fr, Tl} eine Gruppe von Elementen, wobei bei gleichzeitigem Vorhandensein zweier Elemente der Gruppe in einem Sicherheitsmerkmal ohne zusätzliches Wissen nicht offensichtlich ist, ob nur erstes, zweites, oder eine Mischung beider Elemente Bestandteil der Merkmalskomponente sind. Dabei bilden {Na, K} aufgrund ihrer häufigen gemeinsamen Verwendung eine bevorzugte Untergruppe.

Die mögliche Bildung von Elementgruppen beschränkt sich nicht auf Elemente gleicher Hauptgruppen des Periodischen Systems der Elemente bzw. Elemente gleicher Ladungszahl. Beispielsweise sind die Elemente {Al, Si, P, S} hinsichtlich ihrer Tendenz zur Bildung kovalenter Sauerstoffverbindungen in tetraedrischer Koordinierung sehr ähnlich. So lassen sich viele Beispiele finden in denen diese Elemente ohne größere Veränderung der Struktur gegeneinander ausgetauscht werden können, so lange ein Ladungsausgleich stattfindet. Bekannte Beispiele sind Zeolithe, in denen die gleiche Gerüststruktur von Al und Si im Verhältnis 1:1 oder nur von Si (all-silica zeolites) sowie von beliebigen Zwischenzuständen mit mehr oder weniger Aluminium gebildet werden kann. Der Ladungsausgleich findet hier z. B. über die Menge von Gegenkationen in den Zeolithkanälen statt. Ebenso kann z. B. Phosphor durch Silizium und Schwefel ersetzt werden. Beispielsweise lassen sich sowohl die Extreme Apatit Ca₁₀(PO₄)₆F₂ und Ellestadit Ca₁₀(SiO₄)₃(SO₄)₃F₂ sowie beliebige Mischformen beider Verbindungen herstellen. Strukturanaloga von Zeolithen und bestimmten Aluminophosphaten ("AlPOs") sind ebenfalls hinreichend bekannt.

Eine weitere gerade für Sicherheitsmerkmale relevante Gruppierung bildet {Ca, Sr, Ba, Bi, Y, La, Ce, Gd, Lu}, da Ca, Sr, Ba und Bi die wenigen vom Ionenradius und Strukturchemie mit Seltenerden einigermaßen kompatiblen Elemente sind, die für Luminophormatrizen eingesetzt werden. Es ist bekannt, dass der Einbau von Seltenerddotierungen in lumineszenten Sicherheitsmerkmalen fast ausschließlich in seltenerdhaltigen Matrizen sowie Ca-, Sr-, Ba-Aluminaten und Silikaten usw. stattfindet, da in anderen Matrizen meistens keine geeignet großen kationischen Einbaupositionen existieren. In einem seltenerddotierten Sicherheitsmerkmal ist somit mindestens eines dieser Elemente vorhanden, und das hinzuziehen weiterer Elemente der Gruppe erschwert die Identifizierung der verwendeten Matrix somit deutlich.

Lumineszenzbasierte Sicherheitsmerkmale sind fast ausschließlich Oxide, Sulfide oder Oxisulfide. In der Gruppe {O, S, Se, Te} nimmt somit {O, S} eine bevorzugte Sonderrolle ein, um die Zuordnung zu Oxid, Sulfid oder Oxisulfid zu erschweren. Beispielsweise kann bei Verwendung eines oxidischen Merkmals gleichzeitig eine schwefelhaltige Verbindung zugesetzt werden, damit nach Elementaranalyse bzw. Aufschluss nicht klar ist ob es sich beim Merkmal um ein Oxid, Sulfid oder Oxisulfid handelt. Da Sulfide und Oxisulfide sich bei Veraschung bzw. bei bestimmten Aufschlußformen in Sulfate umwandeln, können statt Sulfiden auch Sulfate zugesetzt werden um eine entsprechende Tarnung zu erreichen.

Da Oxisulfide oft ein Sauerstoff-Schwefel-Verhältnis von 2:1 besitzen (z. B. Gd₂O₂S) und der Schwefelgehalt z. B. bei Veraschung der Banknoten teilweise in Form gasförmiger Verbindungen entweichen kann, nimmt die Vertarnung durch {O, S} auch mengentechnisch eine Sonderrolle ein. Während für sonstige Matrixbestandteile wie bereits gefordert mindestens 30%, bevorzugt mindestens 50%, besonders bevorzugt mindestens 80% des molaren Anteils eines Elements einer Matrix hinzugefügt wird, reicht - aus obengenannten Gründen - im Falle von oxidischen Matrizen durch Schwefelzugabe ein deutlich geringerer Anteil aus. Deshalb können mindestens 5%, bevorzugt mindestens 15%, besonders bevorzugt mindestens 30% des molaren Anteils an Sauerstoff einer oxidischen Matrix mit Schwefel in Form von Sulfiden, Oxisulfiden oder Sulfaten getarnt werden.

Weitere Gruppierungen mit ähnlichen strukturchemischen Eigenschaften aufgrund ihrer Positionierung in einer gemeinsamen Hauptgruppe des Periodensystems sind die Gruppe der Erdalkalimetalle {Be, Mg, Ca, Sr, Ba, Ra}, wobei hier {Ca, Sr, Ba} aufgrund ihrer größeren Ähnlichkeit eine bevorzugte Untergruppe bilden. Ebenso bilden {B, Al, Ga, In, Tl} eine Gruppe, wobei {Al, Ga} eine bevorzugte Untergruppe bilden. Ebenso bilden {Si, Ge, Sn} eine Gruppe, {P, As, Sb} eine Gruppe und {F, Cl, Br, I} eine Gruppe.

Die niedrigen Übergangsmetalle der vierten Periode des Periodensystems besitzen ähnliche Ionenradien und chemischen Affinitäten. Speziell lumineszierende Sicherheitsmerkmale können dabei absorbierende Übergangsmetalle enthalten, wobei bevorzugt Kombinationen der Elemente {Cr, Mn, Fe, Co, Ni} verwendet werden, wie z. B. teilweise in WO 81/03507 offenbart wird. Die Elemente {Cr, Mn, Fe, Co, Ni} bilden daher eine Gruppe.

Weitere Übergangsmetalle mit stark ähnlichen strukturchemischen Eigenschaften in anorganischen Matrizen sind {Ti, Zr}, { Nb, Ta}, {Mo, W}, {Pd, Pt}, {Zn, Cd}, welche ebenfalls Gruppen bilden.

Neben den zuvor beschriebenen Komponenten kann das Sicherheitsmerkmal zusätzliche Komponenten aufweisen. Aus technischer Sicht sind oft zusätzliche Funktionalitäten zu erfüllen, z. B. der Ausgleich von Produktionsschwankungen oder eine forensische Identifizierbarkeit des Sicherheitsmerkmals. Die zusätzlichen Komponenten müssen nicht in allen Fällen der Tarnung des Sicherheitsmerkmals dienen. Bevorzugt werden die zusätzlichen Komponenten jedoch derart ausgewählt, dass neben der geforderten technischen Funktion ebenfalls eine Tarnung der chemischen Elemente der lumineszierenden Komponente ermöglicht wird. Ebenso werden bevorzugt bestimmte zusätzliche Komponenten, besonders bevorzugt die Komponente zur forensischen Identifizierung, so gewählt, dass sie durch die tarnende Komponente ebenfalls getarnt werden.

Eine Produktionskomponente ist in dem Gesamtgemisch des Sicherheitsmerkmals bevorzugt zu 0 bis 20%, besonders bevorzugt zu 0 bis 10% enthalten (alle Angaben in Gewichtsprozent). Dient die Produktionskomponente gleichzeitig als Tarnung der chemischen Elemente der lumineszierenden Komponente, sind die bevorzugten Anteile entsprechend höher, da die Produktionskomponente dann für den Ausgleich von Produktionsschwankungen nicht mehr auf geringe Mengenanteile reduziert werden kann, ohne die Funktion der Tarnung zu gefährden. In diesem Fall liegen die bevorzugten Anteilsmengen daher bei 25 bis 45%, besonders bevorzugt bei 25 bis 35%.

Die Produktionskomponente ist aus produktionstechnischer Sicht notwendig, um eine gleichbleibende Qualität bzw. Signalintensität des Sicherheitsmerkmals zu gewährleisten. Abhängig von Herstellungsbedingungen wie den verwendeten Rohstoffchargen und darin enthaltenen Verunreinigungen, Glühparametern, Mahlparametern usw. kann es zu einer Intensitätsschwankung des Lumineszenzsignals der lumineszierenden Komponente kommen. Um solche Schwankungen auszugleichen, wird der entsprechend benötigte Anteil der Produktionskomponente dem das Sicherheitsmerkmal bildenden Gemisch hinzugefügt, um das Lumineszenzsignal auf eine vorgegebene Normgröße einzustellen. Dadurch kann erreicht werden, dass bei Einsatz des Sicherheitsmerkmals, z. B. bei der Herstellung von Wertdokumenten, die jeweilige Dosierung bei der Einbringung des Sicherheitsmerkmals auch dann nicht variiert werden muss, wenn die zuvor beschriebenen Produktionsschwankungen auftreten. Aus unterschiedlichen Produktionen stammende Sicherheitsmerkmale können somit ohne Umstellung von Herstellungsparametern für die Herstellung von Wertdokumenten verwendet werden.

Eine Kodierungskomponente für eine forensische Identifizierbarkeit des Sicherheitsmerkmals ist in dem Gemisch bevorzugt zu 0 bis 10%, besonders bevorzugt zu 0,5 bis 5%, ganz besonders bevorzugt zu 1 bis 3% enthalten. Es handelt sich bei der Kodierungskomponente um ein forensisches Merkmal, durch welches z. B. unterschiedliche Produktionschargen, Lieferungen, Hersteller, oder Verarbeiter markiert werden können. Bevorzugt handelt es sich hierbei um einen Luminophor. Dieser muss jedoch nicht notwendigerweise wie die lumineszierende Komponente im nichtsichtbaren Spektralbereich emittieren, oder für Maschinenlesbarkeit bzw. -prüfung geeignete spektrale Eigenschaften und Abklingzeiten aufweisen. Vielmehr soll die Maschinenlesbarkeit der lumineszierenden Komponente des Sicherheitsmerkmals durch die Kodierungskomponente nicht negativ beeinflusst werden. Daher sollte sich die Kodierungskomponente vorzugsweise in Anregung und Emission von der verwendeten lumineszierenden Komponente des Sicherheitsmerkmals stark unterscheiden. Die Detektion der Kodierungskomponente kann über forensische Methoden erfolgen, z. B. durch den Einsatz eines Fluoreszenzmikroskops oder Messung an spezialisierten Laboraufbauten usw.

Als Kodierungskomponente bevorzugt werden mit Seltenerden und/oder Übergangsmetallen beladene kollabierte Zeolithstrukturen benutzt, wie sie beispielsweise in DE 100 56 462 A1 beschrieben werden. Diese bieten den Vorteil, dass Zeolithe über Ionenaustausch einfach mit einer Vielzahl von Kationen beladen werden können. Bevorzugt können auch andere kristalline anorganische Matrizen welche mit Seltenerden und/ oder Übergangsmetallen dotiert sind eingesetzt werden. Besonders bevorzugt handelt es sich bei den Lumineszenzzentren der Kodierungskomponente um im sichtbaren emittierende dreiwertige Seltenerdspezies, z. B. um Praseodym, Samarium, Europium, Terbium, und Dysprosium, da diese spezifische strukturierte Emissionsspektren im sichtbaren Spektralbereich besitzen und sich somit für eine eindeutige optische forensische Erkennung besonders gut eignen. Bevorzugt werden dabei als Matrizen Oxide, z. B. in Form von Granaten, Spinellen, oder Perowskiten, sowie Oxisulfide, Sulfide, Silikate, Phosphate, Aluminate, Niobate, Tantalate, Vanadate, Germanate, Arsenate, Zirkonate oder Wolframate eingesetzt. Beispiele für solche und weitere Substanzen sind in den Schriften US 3,980,887, US 4,014,812, US 3,981,819 und WO 2006/047621 A1 beschrieben. Zusätzlich zum Anregungs- oder Emissionsspektrum kann dabei auch die Lebensdauer der Lumineszenz überprüft werden.

Bevorzugt ist der Anteil an Seltenerdionen und/ oder Übergangsmetallen in der Kodierungskomponente derart gewählt, dass er bei Elementaranalyse des Gesamtgemischs des Sicherheitsmerkmals mit dem Anteil eines Seltenerdmetalls und/oder Übergangsmetalls eines Dotierstoffes der lumineszierenden Komponente vergleichbar ist. Dadurch tarnt die Kodierungskomponente zusätzlich den oder die Dotierstoffe der lumineszierenden Komponente. In diesem Fall kann auf den Einsatz der oben zur Tarnung der aktiven Dotierstoffe beschriebenen Substanzen D1, D2, ... verzichtet werden, bzw. weniger Stoffe D1, D2, ... eingesetzt werden.

### Beispiel 1

Aus WO 2011/084663A2 ist ein Sicherheitsmerkmal in Form einer lumineszierenden Komponente Y_{2,88}Er_{0.1}Tm_{0,01}Ho_{0,01}Ga₅O₁₂ bekannt. Die lumineszierende Komponente weist somit eine Matrix bzw. ein Wirtsgitter mit den Elementen Y, Ga und O auf. Die aktiven Dotierstoffe werden von den Elementen Er, Tm und Ho gebildet.

Zur Tarnung des Matrixelements Y kann z. B. aus der bevorzugten Untergruppe {Y, La, Ce, Gd, Lu} das Element La und aus der Gruppe {Ca, Sr, Ba, Bi, Y, La, Ce, Gd, Lu} das Element Sr ausgewählt werden. Zur Tarnung von Ga kann z. B. aus der bevorzugten Untergruppe {Al, Ga} das Element Al gewählt werden. Zur Tarnung von O kann z. B. aus der bevorzugten Untergruppe {O, S} das Element S gewählt werden. Zur Vertarnung der Dotierstoffe Er, Tm, Ho können z. B. aus der bevorzugten Untergruppe {Ce, Pr, Nd, Sm, Eu, Tb, Er, Tm, Yb} die Elemente Yb und Nd ausgewählt werden.

Zur Einbringung der zur Tarnung der Matrix (M) notwendigen Elemente La, Sr, Al, S bieten sich z. B. die Verbindungen Lanthanoxisulfid (E1) und Strontiumaluminat (E2) an, da hier jeweils zwei benötigte Elemente in einer Verbindung vereint sind und aus anwendungstechnischen Gründen die Anzahl an Mischkomponenten möglichst klein gehalten werden sollte. Die Tarnkomponenten für die Dotierstoffe können z. B. in Form der Oxide Yb₂O₃ (D1) und Nd₂O₃ (D2) eingesetzt werden.

Unter Berücksichtigung der zuvor beschriebenen benötigten Einsatzmengen ergibt sich daraus beispielsweise folgendes Gesamtgemisch für das Sicherheitsmerkmal (Angaben in Gewichtsprozent):

33% Y_{2,88}Er_{0,1}Tm_{0.01}Ho_{0,01}Ga₅O₁₂ (M)

50% La₂O₂S (E1)

15% SrAl₂O₄ (E2)

1% Yb₂O₃ (D1)

1% Nd₂O₃ (D2)

### Beispiel 2

Aus EP 1 241 242 A2 ist ein maschinenlesbares Sicherheitsmerkmal bekannt: Gd_{(1-x-y)2}O₂S:Ybₓ, Tm_{y}, mit 0,05 ≤ x ≤ 0,80 und 0,0001 ≤ y ≤ 0,10

Aus dem angegebenen Bereich wird beispielhaft Gd_{1,89}Yb_{0,1}Tm_{0,01}O₂S gewählt.

Zur Tarnung des Matrixelementes Gd werden aus der Gruppe {Ca, Sr, Ba, Bi, Y, La, Ce, Gd, Lu} die Elemente Ca, Ba, La und Ce gewählt. Zur Tarnung der Dotierstoffe Yb und Tm werden aus der bevorzugten Untergruppe {Ce, Pr, Nd, Sm, Eu, Tb, Er, Tm, Yb} die Elemente Er und Ho gewählt. Zusätzlich soll das Sauerstoff-Schwefel-Verhältnis des Sicherheitsmerkmals durch Zugabe von zusätzlichem Schwefel verzerrt werden. Als technische Hilfsmittel soll die Mischung einen variablen Anteil einer Produktionskomponente (P) und eine Kodierungskomponente enthalten. Als Kodierungskomponente (C) wird ein Zeolith 5A gewählt, welcher analog der Beschreibung in DE 100 56 462 A1 mit Samariumchlorid ionenausgetauscht und anschließend bei 1150°C geglüht wurde, um eine Verbindung mit der ungefähren Summenformel Na_{0,7}Sm_{0,1}AlSiO₄ zu erhalten. Die forensische Detektion dieser Kodierungskomponente kann beispielsweise über ein Lumineszenzmikroskop erfolgen.

Die zur Tarnung der Matrix und Verzerrung der Stöchiometrie benötigten Elemente Y, Ca, Ba, Ce, S können beispielsweise über die Verbindungen CaAl₂O₄, LaB₆, Ce₂O₃, BaSO₄ eingebracht werden. Als zusätzlicher Vorteil wird dabei Al in der forensischen Komponente durch das Bor des LaB₆ verborgen (Gruppe {B, Al, Ga, In, Tl}), sowie durch CaAl₂O₄ zusätzliches Aluminium eingeführt, um das Aluminium-Silizium-Verhältnis der Kodierungskomponente zu verzerren. Bariumsulfat bildet gleichzeitig eine elementare Tarnung und wird als Produktionskomponente verwendet. Die Dotierstoffe Yb und Tm werden durch Er₂O₃, Ho₂O₃ und den Samarium-Gehalt der Kodierungskomponente getarnt.

Unter Berücksichtigung der zuvor beschriebenen benötigten Einsatzmengen ergibt sich daraus beispielsweise folgendes Gesamtgemisch für das Sicherheitsmerkmal (Angaben in Gewichtsprozent):

35% Gd_{1,89}Yb_{0,1}Tm_{0,01}O₂S (M)

10% CaAl₂O₄ (E1)

10% LaB₆ (E2)

10% Ce₂O₃ (E3)

30% BaSO₄ (E4/P)

2% Na_{0,7}Sm_{0,1}AlSiO₄ (C)

2% Er₂O₃ (D1)

1% Ho₂O₃ (D2)

### Beispiel 3

Eine lumineszierende Komponente der Zusammensetzung LaPO₄:Er_{0,1} soll getarnt werden. Zur Tarnung des Elements La wurde aus der Gruppe {Ca, Sr, Ba, Bi, Y, La, Ce, Gd, Lu} Sr ausgewählt. Zur Tarnung des Elements P wurden aus der Gruppe {Al, Si, P, S} Al und Si ausgewählt. Für das Element Er wurden aus der bevorzugten Untergruppe {Ce, Pr, Nd, Sm, Eu, Tb, Er, Tm, Yb} Tm und Yb ausgewählt. Als Produktionskomponente wird TiO₂ eingesetzt. Die Kodierungskomponente ist SrAl₂O₄:Eu_{0,02}.

Die zur Tarnung der Elemente der Matrix benötigten Elemente Sr, Al, Si können beispielsweise durch Einsatz von Sr₃(PO₄)₂ und NaAlSiO₄ (Zeolith 5A) bereitgestellt werden.

Unter Berücksichtigung der zuvor beschriebenen benötigten Einsatzmengen ergibt sich daraus beispielsweise folgendes Gesamtgemisch für das Sicherheitsmerkmal (Angaben in Gewichtsprozent):

35% La_{0,9}Er_{0,1}PO₄ (M)

25% Sr₃(PO₄)₂ (E1)

15% NaAlSiO₄ (E2)

20% TiO₂ (P)

1% SrAl₂O₄:Eu_{0,02} (C)

1% Tm₂O₃ (D1)

3% Yb₂O₃ (D2)

### Beispiel 4

Aus DE10 2006 047852 A1 ist eine lumineszierende Komponente YAlO₃:Cr_{0,02} bekannt. Zur Tarnung von Y wurden aus der Gruppe {Ca, Sr, Ba, Bi, Y, La, Ce, Gd, Lu} Sr und Gd gewählt. Für Al wurde aus der bevorzugten Untergruppe {Al, Ga} Ga gewählt. Zur Tarnung von O wurde aus der bevorzugten Untergruppe {O, S} S ausgewählt. Zur Tarnung der Dotierung Cr wurden aus der Gruppe {Cr, Mn, Fe, Co, Ni} Mn und Fe gewählt. Die Kodierungskomponente bildet YAG:Tb_{0,01}.

Die zur Tarnung der Elemente der Matrix benötigten Elemente Sr, Gd, Ga und S lassen sich z. B. in Form von Gd₃Ga₅O₁₂ und SrSO₄ zugeben.

Unter Berücksichtigung der zuvor beschriebenen benötigten Einsatzmengen ergibt sich daraus beispielsweise folgendes Gesamtgemisch für das Sicherheitsmerkmal (Angaben in Gewichtsprozent):

30% YAl_{0.98}Cr_{0.02}O₃ (M)

25% Gd₃Ga₅O₁₂ (E1)

40% SrSO₄ (E2/P)

3% Y_{2.99}Tb_{0.01}Al₅O₁₂ (C)

1% MnO (D1)

1% Fe₂O₃ (D2)

## Patentansprüche

1. Sicherheitsmerkmal mit einer lumineszierenden Komponente mit mindestens einem Luminophor, bestehend aus mindestens einem dotierten Wirtsgitter, und einer die lumineszierende Komponente tarnenden Komponente, wobei die tarnende Komponente chemische Elemente aufweist, die ähnliche strukturchemische Eigenschaften wie die chemischen Elemente der lumineszierenden Komponente aufweisen und die chemischen Elemente der tarnenden Komponente und die chemischen Elemente der lumineszierenden Komponente von unterschiedlichen chemischen Elementen gebildet werden, wobei die tarnende Komponente von chemischen Elementen gebildet wird, die derart auf die chemischen Elemente der lumineszierenden Komponente abgestimmt sind, dass sie ein ähnliches strukturchemisches Verhalten haben, d.h. sie bilden isostrukturelle Verbindungen oder homologe Mischreihen, wobei die für die Tarnung verwendeten chemischen Elemente der tarnenden Komponente und die zu tarnenden chemischen Elemente der lumineszierenden Komponente gleichzeitig mindestens einer Gruppe {Li, Na, K, Rb, Cs, Fr, Tl} von chemischen Elementen angehören,
oder einer Gruppe {Al, Si, P, S},
oder einer Gruppe {Be, Mg, Ca, Sr, Ba, Ra},
oder einer Gruppe {B, Al, Ga, In, Tl},
oder einer Gruppe {Si, Ge, Sn},
oder einer Gruppe {P, As, Sb},
oder einer Gruppe {F, Cl, Br, I},
oder einer Gruppe { Cr, Mn, Fe, Co, Ni },
oder einer Gruppe {Ti, Zr},
oder einer Gruppe {Nb, Ta},
oder einer Gruppe {Mo, W},
oder einer Gruppe {Pd, Pt},
oder einer Gruppe {Zn, Cd} von chemischen Elementen angehören.

2. Sicherheitsmerkmal nach Anspruch 1, wobei die tarnende Komponente mindestens zwei, bevorzugt mindestens drei, besonders bevorzugt mindestens vier zusätzliche chemische Elemente enthält, die ähnliche strukturchemische Eigenschaften wie die chemischen Elemente des Wirtsgitters aufweisen, und mindestens ein, bevorzugt mindestens zwei zusätzliche chemische Elemente enthält, die ähnliche strukturchemische Eigenschaften wie die chemischen Elemente eines für die Dotierung des Wirtsgitters verwendeten Dotierstoffs aufweisen.

3. Sicherheitsmerkmal nach Anspruch 2, wobei die tarnende Komponente mindestens eine, bevorzugt mindestens zwei, besonders bevorzugt mindestens drei Substanzen (E1, E2, E3, ...) für die Tarnung der chemischen Elemente des Wirtsgitters enthält, und mindestens eine, bevorzugt mindestens zwei Substanzen (D1, D2, ...) für die Tarnung des verwendeten Dotierstoffs.

4. Sicherheitsmerkmal nach Anspruch 3, wobei jede der Substanzen (E1, E2, E3, ...) für die Tarnung der chemischen Elemente des Wirtsgitters einem Anteil von 5% bis 60%, bevorzugt von 10% bis 40%, am Sicherheitsmerkmal aufweist, und die zusätzlichen chemischen Elemente zu mindestens 30%, bevorzugt zu mindestens 50%, besonders bevorzugt zu mindestens 80% der molaren Menge des jeweils zu tarnenden chemischen Elements des Wirtsgitters aufweist.

5. Sicherheitsmerkmal nach Anspruch 3 oder 4, wobei mindestens eine der Substanzen (E1, E2, E3, ...) für die Tarnung der chemischen Elemente des Wirtsgitters zusätzlich ein chemisches Element des Wirtsgitters enthält, um das Elementverhältnis des Wirtsgitters zu verbergen, und dass zusätzlich oder stattdessen eine andere Substanz enthalten ist, die ein chemisches Element des Wirtsgitters enthält, um das Elementverhältnis des Wirtsgitters zu verbergen.

6. Sicherheitsmerkmal nach einem der Ansprüche 1 bis 5, wobei die chemischen Elemente der tarnenden Komponente und die chemischen Elemente der lumineszierenden Komponente einer Gruppe {Y, La, Ce, Pr, Nd, Pm, Sm, Eu, Gd, Tb, Er, Tm, Yb, Lu} von chemischen Elementen angehören.

7. Sicherheitsmerkmal nach Anspruch 6, wobei die chemischen Elemente des Wirtsgitters sowie die sie tarnenden chemischen Elemente einer Untergruppe {Y, La, Ce, Gd, Lu} angehören, wohingegen die chemischen Elemente des Dotierstoffs sowie die sie tarnenden chemischen Elemente einer Untergruppe {Ce, Pr, Nd, Sm, Eu, Tb, Er, Tm, Yb} angehören.

8. Sicherheitsmerkmal nach einem der Ansprüche 1 bis 7, wobei die chemischen Elemente der tarnenden Komponente und die chemischen Elemente der lumineszierenden Komponente mindestens einer Untergruppe {Na, K} von chemischen Elementen angehören,
oder einer Untergruppe {Ca, Sr, Ba},
oder einer Untergruppe
{Al, Ga}.

9. Sicherheitsmerkmal nach einem der Ansprüche 1 bis 8, wobei das Sicherheitsmerkmal eine Produktionskomponente aufweist, zur Einstellung der Signalintensität der Lumineszenz der lumineszierenden Komponente auf einen vorgebbaren Nennwert.

10. Sicherheitsmerkmal nach Anspruch 9, wobei die chemischen Elemente der Produktionskomponente ähnliche strukturchemische Eigenschaften wie die chemischen Elemente der lumineszierenden Komponente aufweisen.

11. Sicherheitsmerkmal nach einem der Ansprüche 1 bis 10, das Sicherheitsmerkmal eine Kodierungskomponente aufweist, zur forensischen Kennzeichnung des Sicherheitsmerkmals.

12. Sicherheitsmerkmal nach Anspruch 11, wobei die chemischen Elemente der Kodierungskomponente ähnliche strukturchemische Eigenschaften wie die chemischen Elemente der lumineszierenden Komponente aufweisen.

13. Wertdokument mit einem Sicherheitsmerkmal nach einem der Ansprüche 1 bis 12, wobei das Wertdokument aus Papier und/oder Kunststoff besteht.

14. Wertdokument nach Anspruch 13, wobei das Sicherheitsmerkmal in das Volumen des Wertdokumentes eingebracht und/oder auf das Wertdokument aufgebracht ist.

15. Wertdokument nach Anspruch 13 oder 14, wobei das Sicherheitsmerkmal als unsichtbare, zumindest teilweise Beschichtung auf das Wertdokument aufgebracht ist.

16. Verfahren zum Herstellen des Sicherheitsmerkmals nach einem der Ansprüche 1 bis 12, umfassend den Schritt des Hinzufügens von Alternativen für die jeweils einzelnen Matrixbestandteile des Luminophors durch die tarnende Komponente, sodass nach einer Analyse des Sicherheitsmerkmals nicht sicher erkannt werden kann, welche chemischen Elemente am Aufbau der Matrix des Luminophors beteiligt sind.

## Claims

1. Security feature comprising a luminescent component comprising at least one luminophore, consisting of at least one doped host lattice, and a component camouflaging the luminescent component, wherein the camouflaging component has chemical elements having structure-chemical properties similar to those of the chemical elements of the luminescent component and the chemical elements of the camouflaging component and the chemical elements of the luminescent component are formed by different chemical elements, wherein the camouflaging component is formed by chemical elements which are coordinated with the chemical elements of the luminescent component in such a way that they have a similar structure-chemical behaviour, i.e. they form isostructural compounds or homologous mixed series, wherein the chemical elements of the camouflaging component that are used for the camouflage and the chemical elements of the luminescent component that are to be camouflaged simultaneously belong to at least one group {Li, Na, K, Rb, Cs, Fr, Tl} of chemical elements,
or a group {Al, Si, P, S},
or a group {Be, Mg, Ca, Sr, Ba, Ra},
or a group {B, Al, Ga, In, Tl},
or a group {Si, Ge, Sn},
or a group {P, As, Sb},
or a group {F, Cl, Br, I},
or a group {Cr, Mn, Fe, Co, Ni},
or a group {Ti, Zr},
or a group {Nb, Ta},
or a group {Mo, W},
or a group {Pd, Pt},
or a group {Zn, Cd} of chemical elements.

2. Security feature according to Claim 1, wherein the camouflaging component contains at least two, preferably at least three, particularly preferably at least four, additional chemical elements having structure-chemical properties similar to those of the chemical elements of the host lattice, and contains at least one, preferably at least two, additional chemical elements having structure-chemical properties similar to those of the chemical elements of a dopant used for the doping of the host lattice.

3. Security feature according to Claim 2, wherein the camouflaging component contains at least one, preferably at least two, particularly preferably at least three, substances (E1, E2, E3, ...) for the camouflage of the chemical elements of the host lattice, and at least one, preferably at least two, substances (D1, D2, ...) for the camouflage of the dopant used.

4. Security feature according to Claim 3, wherein each of the substances (E1, E2, E3, ...) for the camouflage of the chemical elements of the host lattice has a proportion of 5% to 60%, preferably of 10% to 40%, in the security feature, and has the additional chemical elements to the extent of at least 30%, preferably to the extent of at least 50%, particularly preferably to the extent of at least 80%, of the molar amount of the chemical element of the host lattice that is to be camouflaged in each case.

5. Security feature according to Claim 3 or 4, wherein at least one of the substances (E1, E2, E3, ...) for the camouflage of the chemical elements of the host lattice additionally contains a chemical element of the host lattice in order to hide the element ratio of the host lattice, and wherein additionally or instead there is contained a different substance which contains a chemical element of the host lattice in order to hide the element ratio of the host lattice.

6. Security feature according to any of Claims 1 to 5, wherein the chemical elements of the camouflaging component and the chemical elements of the luminescent component belong to a group {Y, La, Ce, Pr, Nd, Pm, Sm, Eu, Gd, Tb, Er, Tm, Yb, Lu} of chemical elements.

7. Security feature according to Claim 6, wherein the chemical elements of the host lattice and also the chemical elements camouflaging them belong to a sub-group {Y, La, Ce, Gd, Lu}, whereas the chemical elements of the dopant and also the chemical elements camouflaging them belong to a sub-group {Ce, Pr, Nd, Sm, Eu, Tb, Er, Tm, Yb}.

8. Security feature according to any of Claims 1 to 7, wherein the chemical elements of the camouflaging component and the chemical elements of the luminescent component belong to at least one sub-group {Na, K} of chemical elements,
or a sub-group {Ca, Sr, Ba},
or a sub-group {Al, Ga}.

9. Security feature according to any of Claims 1 to 8, wherein the security feature has a production component, for setting the signal intensity of the luminescence of the luminescent component to a predefinable nominal value.

10. Security feature according to Claim 9, wherein the chemical elements of the production component have structure-chemical properties similar to those of the chemical elements of the luminescent component.

11. Security feature according to any of Claims 1 to 10, wherein the security feature has a coding component, for forensically identifying the security feature.

12. Security feature according to Claim 11, wherein the chemical elements of the coding component have structure-chemical properties similar to those of the chemical elements of the luminescent component.

13. Value document comprising a security feature according to any of Claims 1 to 12, wherein the value document consists of paper and/or plastic.

14. Value document according to Claim 13, wherein the security feature is introduced into the volume of the value document and/or is applied to the value document.

15. Value document according to Claim 13 or 14, wherein the security feature is applied to the value document as an invisible, at least partial coating.

16. Method for producing the security feature according to any of Claims 1 to 12, comprising the step of adding alternatives for the respective individual matrix constituents of the luminophore by way of the camouflaging component, such that following an analysis of the security feature the chemical elements involved in the structure of the matrix of the luminophore cannot be definitely recognized.

## Revendications

1. Élément caractéristique de sécurité comportant un composant luminescent pourvu d'au moins un luminophore, comprenant au moins un réseau hôte dopé, et un composant de camouflage du composant luminescent, le composant de camouflage comportant des éléments chimiques qui ont des propriétés chimiques structurelles similaires à celles des éléments chimiques du composant luminescent et les éléments chimiques du composant de camouflage et les éléments chimiques du composant luminescent étant formés par des éléments chimiques différents, le composant de camouflage étant formé d'éléments chimiques qui sont coordonnés avec les éléments chimiques du composant luminescent de manière à présenter un comportement chimique structurel similaire, c'est-à-dire à former des composés isostructurels ou des séries mixtes homologues, les éléments chimiques du composant de camouflage, qui sont utilisés pour le camouflage, et les éléments chimiques à camoufler du composant luminescent appartenant simultanément à au moins un groupe {Li, Na, K, Rb, Cs, Fr, Tl} d'éléments chimiques,
ou un groupe {Al, Si, P, S},
ou un groupe {Be, Mg, Ca, Sr, Ba, Ra},
ou un groupe {B, Al, Ga, In, Tl},
ou un groupe {Si, Ge, Sn},
ou un groupe {P, As, Sb},
ou un groupe {F, Cl, Br, I},
ou un groupe {Cr, Mn, Fe, Co, Ni},
ou un groupe {Ti, Zr},
ou un groupe {Nb, Ta},
ou un groupe {Mo, W},
ou un groupe {Pd, Pt},
ou un groupe {Zn, Cd} d'éléments chimiques.

2. Élément caractéristique de sécurité selon la revendication 1, le composant de camouflage contenant au moins deux, de préférence au moins trois, de manière particulièrement préférée au moins quatre, éléments chimiques supplémentaires qui ont des propriétés chimiques structurelles similaires à celles des éléments chimiques du réseau hôte, et au moins un élément chimique supplémentaire, de préférence au moins deux, qui ont des propriétés chimiques structurelles similaires à celles des éléments chimiques d'un dopant utilisé pour doper le réseau hôte.

3. Élément caractéristique de sécurité selon la revendication 2, le composant de camouflage contenant au moins une, de préférence au moins deux, de manière particulièrement préférée au moins trois, substances (E1, E2, E3, ...) destinées au camouflage des éléments chimiques du réseau hôte, et au moins une, de préférence au moins deux, substances (D1, D2, ...) destinées au camouflage du dopant utilisé.

4. Élément caractéristique de sécurité selon la revendication 3, chacune des substances (E1, E2, E3, ...) destinées au camouflage des éléments chimiques du réseau hôte comportant une proportion de 5 % à 60 %, de préférence de 10 % à 40 %, de l'élément caractéristique de sécurité, et les éléments chimiques supplémentaires comportant au moins 30 %, de préférence au moins 50 %, de manière particulièrement préférée au moins 80 %, de la quantité molaire de l'élément chimique à camoufler du réseau hôte.

5. Élément caractéristique de sécurité selon la revendication 3 ou 4, au moins une des substances (E1, E2, E3, ...) destinées à camoufler les éléments chimiques du réseau hôte contenant en outre un élément chimique du réseau hôte afin de masquer le rapport d'éléments du réseau hôte, et une autre substance étant contenue en plus ou à la place, qui contient un élément chimique du réseau hôte destiné à masquer le rapport d'éléments du réseau hôte.

6. Élément caractéristique de sécurité selon l'une des revendications 1 à 5, les éléments chimiques du composant de camouflage et les éléments chimiques du composant luminescent appartenant à un groupe {Y, La, Ce, Pr, Nd, Pm, Sm, Eu, Gd, Tb, Er, Tm, Yb, Lu} d'éléments chimiques.

7. Élément caractéristique de sécurité selon la revendication 6, les éléments chimiques du réseau hôte et les éléments chimiques de camouflage de ceux-ci appartenant à un sous-groupe {Y, La, Ce, Gd, Lu}, alors que les éléments chimiques du dopant et les éléments chimiques de camouflage de ceux-ci appartenant à un sous-groupe {Ce, Pr, Nd, Sm, Eu, Tb, Er, Tm, Yb}.

8. Élément caractéristique de sécurité selon l'une des revendications 1 à 7, les éléments chimiques du composant de camouflage et les éléments chimiques du composant luminescent appartenant à au moins un sous-groupe {Na, K} d'éléments chimiques,
ou un sous-groupe {Ca, Sr, Ba},
ou un sous-groupe {Al, Ga}.

9. Élément caractéristique de sécurité selon l'une des revendications 1 à 8, l'élément caractéristique de sécurité comportant un composant de production permettant de régler l'intensité de signal de la luminescence du composant luminescent à une valeur nominale spécifiée.

10. Élément caractéristique de sécurité selon la revendication 9, les éléments chimiques du composant de production ayant des propriétés chimiques structurelles similaires à celles des éléments chimiques du composant luminescent.

11. Élément caractéristique de sécurité selon l'une des revendications 1 à 10, l'élément caractéristique de sécurité comportant un composant de codage permettant d'effectuer l'identification médico-légale de l'élément caractéristique de sécurité.

12. Élément caractéristique de sécurité selon la revendication 11, les éléments chimiques du composant de codage ayant des propriétés chimiques structurelles similaires à celles des éléments chimiques du composant luminescent.

13. Document de valeur comportant un élément caractéristique de sécurité selon l'une des revendications 1 à 12, le document de valeur étant en papier et/ou en matière synthétique.

14. Document de valeur selon la revendication 13, l'élément caractéristique de sécurité étant introduit dans le volume du document de valeur et/ou appliqué sur le document de valeur.

15. Document de valeur selon la revendication 13 ou 14, l'élément caractéristique de sécurité étant appliqué au document de valeur sous la forme d'un revêtement invisible, au moins partiellement.

16. Procédé de fabrication de l'élément caractéristique de sécurité selon l'une des revendications 1 à 12, ledit procédé comprenant l'étape d'ajout d'alternatives pour les composants matriciels individuels respectifs du luminophore à travers le composant de camouflage de sorte que, après une analyse de l'élément caractéristique de sécurité, l'on ne puisse pas reconnaître de manière fiable quels sont les éléments chimiques qui sont impliqués dans la construction de la matrice du luminophore.
